# EUROPEAN PATENT SPECIFICATION

(11) **EP 0 825 925 B1**
(45) Date of publication and mention of the grant of the patent: **02.05.2007**
(21) Application number: 97904654.7
(22) Date of filing: 19.02.1997
(51) Int. Cl.: B32B 27/08, C09J 7/02

(54) **COVER FOIL**
BESCHICHTUNGSFILM
FEUILLE DE REVETEMENT

(30) Priority: 19.02.1996 NL 1002380
(43) Date of publication of application: 04.03.1998
(73) Proprietor: SALLMETALL B.V., NL-8102 HJ Raalte (NL)
(72) Inventor: REINDERS, Johannes, Antonius, Maria, NL-7231 PE Warnsveld (NL)
(74) Representative: 't Jong, Bastiaan Jacob
(86) International application number: PCT/NL1997/000077
(87) International publication number: WO 1997/029908

(56) References cited:
- EP-A- 0 093 370
- EP-A- 0 168 624
- EP-A- 0 394 550
- EP-A- 0 460 322
- EP-A- 0 475 460
- EP-A- 0 681 927
- WO-A-95/03368
- US-A- 3 600 268

## Description

The invention relates to a light-transmitting cover foil intended to be applied adheringly to a surface optionally carrying information such as letters, numbers, images or the like, for instance the surface of a carrier plate, which foil consists of a laminate according to claim 1, comprising:
a first layer which is for instance only plastically deformable at a relatively high first temperature in the range of 120°C - 200°C, comprising at least one of the group of polycarbonate, PMMA, PVC, ABS, PP, PE, which first layer is provided before, during or after joining together with the other layers with a structure, for instance a texture and/or a pattern pressed out of its main surface by exerting pressure and increasing temperature to at least the said first temperature, for instance by using a heated profile roller;
a second layer adhered thereto consisting of a dimensionally stable carrier layer, for instance comprising polycarbonate, PMMA, PVC, polyester/PET, ABS; and
   adhered thereto,
either a third layer meltable and thus thermally-activated at a relatively low second temperature, in the range of 50°C - 90°C, and consisting of a hot-melt or glue layer, comprising EVA, EEA, EBA, EMA, GBA or other low-melting plastics, including polyolefins, copolymer esters, polyacetate esters, softened PVCs, acrylates and acryl-based substances;
or a pressure-sensitive glue layer, which said layers are mutually connected by adhesive agents, for instance by making use of co-extrusion.

Such a cover foil is described in applicant's non pre-published international patent application PCT/NL95/ 00318.

During use of a cover foil according to the said older patent application it has been found that, after winding of the foil into a roll, the outer surfaces of the foil then pressing onto each other with some force cannot always be entirely prevented from mutually adhering.

The third layer can be of the thermally-activated type, which for instance only melts at about 80°. Under ideal and substantially tension-free and friction-free winding conditions the outer surfaces of the first and third layer can then in principle not adhere to each other. It has nevertheless been found that also at the said melting point this adhesion does in fact occur. It occurs because a thermally-activated glue also has a certain, albeit slight, pressure-sensitivity, but also because during winding up of the foil at a certain strip tension the layers lying on top of one another can slide over each other with friction, whereby a quite considerable temperature increase to above the said melting point can occur locally.

Document EP-A-0 681 927 relates to a self-wound roll of a pressure sensitive adhesive coated laminate comprising a substrate, a layer comprising a continuous film of a polymer adhesively fixed to one or both sides of the substrate, a transparent flexible release layer of a resin on the outwardly facing surface of the laminate and a layer of an adhesive on the inwardly facing surface of the substrate.

It will be apparent that when layers mutually adhere an easy, well-controlled and disturbance-free unwinding cannot always be guaranteed. The invention has for its object to embody a cover foil of the said type such that the described drawbacks do not occur.

In this respect the cover foil according to the invention has the special feature that the outer surface of the first layer is of the type which substantially does not adhere to the outer surface of the third layer such that in the rolled-up state of the cover foil these outer surfaces lying on one another substantially do not mutually adhere.

The foil is characterized by a light-transmitting non-adhesive layer arranged on the outer surface of the first layer.

The non-adhesive layer consists of a film or layer of silicone material, PTFE, PE, PP or combinations thereof.

Yet another embodiment has the special feature that the first layer consists of a light-transmitting material which substantially does not adhere to the outer surface of the third layer.

This latter embodiment can have the feature that the first layer consists of light-transmitting, for instance transparent, PTFE, PE, PP or combinations thereof.

It is noted that the stated, undesired mutual adhesion of the two outer surfaces of the foil could also be prevented by arranging a protective foil against the outer surface of the third layer. The drawback thereof is that this protective foil must be removed during unwinding and separately rolled up or discarded. This makes machine processing of the foil needlessly complicated and also has the drawback of resulting in additional waste.

Attention is drawn to the fact that when a pressure-sensitive third layer is used the melting temperature of the first layer can be relatively low, in particular considerably lower than the range of 120°-200°C mentioned in the preamble.

A silicone film can be arranged by making use of a solvent evaporating after application such as toluene, by spraying on an emulsion or by applying a pure silicone material without using a solvent. Use can for instance be made of a squeegee or the like. The thickness of a silicone film can be very small and lie for instance in the order of a few micrometers. When a relatively porous outer surface is used it can be recommended to treat this surface such that it is sealed, for instance by a treatment at increased temperature and a certain pressure.

The invention will now be elucidated with reference to the annexed drawing. Herein:
figure 1 shows a schematic view of a device which is adapted for processing a cover foil, wherein the outer surface of the third layer is covered by a protective foil which must be removed before use;
figure 2 shows a cross section through a first embodiment of a cover foil according to the invention;
figure 3 is a cross section through a variant.

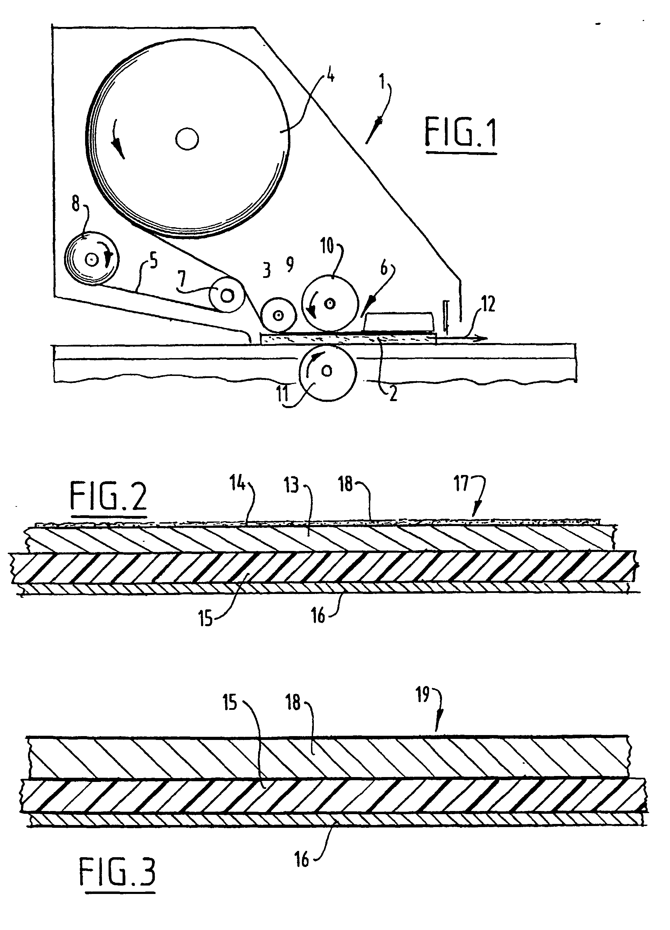

Figure 1 shows a device 1 for arranging a light-transmitting cover foil 3 on a carrier 2. The cover foil 3 comprises a third layer acting as glue layer. The glue is of the pressure-sensitive type and is covered in the rolled-up state on roll 4 by a silicone protective foil 5 which must be removed prior to the application process in application station 6. For this purpose the protective foil is deflected by a deflecting roller 7 and guided therefrom to a waste roll 8 in order to be wound thereon. In order to arrange onto the carrier 2 the foil 3 from which the protective foil 5 is removed, this foil 3 is deflected by deflecting roller 9 and subsequently introduced into the pinch between two rollers 10, 11 for pressing onto carrier 2 while being transported according to arrow 12.

It will be apparent that this device 1 operates impractically insofar that special provisions are necessary to remove the protective foil 5.

Figure 2 shows a light-transmitting cover foil according to the invention. This foil comprises a first layer which is only plastically deformable at a relatively high first temperature, in the range of 120°C - 200°C, consisting of polycarbonate, PMMA, PVC, ABS, PP, PE or combinations thereof, which first layer 13 is provided before, during or after joining together with the other layers mentioned hereinbelow with a structure, for instance a texture on the outer surface 14.

Adhered to the first layer 13 by means of adhesive agents is a second layer 15, consisting of a dimensionally stable carrier layer, for instance consisting of polycarbonate, PMMA, PVC, polyester/PET, ABS or combinations thereof.

On the underside of this second layer is a glue layer 16 which is either meltable at a relatively low second temperature, in the range 50° - 90°C, or which is pressure-sensitive. This layer 16 is adhered to the second layer 15 by means of suitable adhesive agents.

In order to ensure in the case of a rolled-up foil 17 that the glue layer 16 cannot adhere to the free upper surface of the first layer 13, that upper surface of first layer 13 is provided in this embodiment with a non-adhesive layer 18. In this embodiment the non-adhesive layer consists of a film of silicone material.

Figure 3 shows a variant wherein the whole first layer 18 of cover foil 19 consists of a material which does not adhere to the glue layer 16. This material can for instance be transparent PTFE.

Attention is drawn to the fact that with use of the invention the non-adhesive layer is situated on the outer surface of an applied cover foil. Graffiti for instance will therefore not adhere to this foil, which can be regarded as a very welcome additional feature of the invention.

Attention is further drawn to the fact that the gloss of an applied foil can also be controlled by the choice of the non-adhesive layer.

## Claims

1. Light-transmitting cover foil (17,19) intended to be applied adheringly to a surface optionally carrying information such as letters, numbers, images or the like, for instance the surface of a carrier plate, which foil consists of a laminate, comprising:
a first layer (13) which is only plastically deformable at a relatively high first temperature, which first layer is provided before, during or after joining together with the other layers with a structure, pressed out of its main surface by exerting pressure and increasing temperature to at least the said first temperature;
a second layer (15) adhered thereto consisting of a dimensionally stable carrier layer; and
adhered thereto,
either a third layer (16) meltable and thus thermally-activated at a relatively low second temperature, and consisting of a hot-melt or glue layer, said layer comprising at least one of the group of polycarbonate, PMMA, PVC, polyester/PET, and ABS,
or a pressure-sensitive glue layer,
which said layers are mutually connected by adhesive agents,
**characterized in that**
a light-transmitting non-adhesive layer (18) consisting of a film or layer of silicone material, PTFE, PE, PP or combinations thereof is arranged on the outer surface (14) of the first layer (13),
wherein the first high temperature is in the range of 120°C - 200°C, and wherein the first layer comprises at least one of the group of polycarbonate, PMMA, PVC, ABS, PP and PE.
wherein the low second temperature is in the range of 50°C - 90°C and wherein the third layer comprises at least one of the group of EVA, EEA, EBA, EMA, GBA, polyolefins, copolymer esters, polyacetate esters, softened PVC's, acrylates and acryl-based substances.

2. Cover foil as claimed in claim 1,
**characterized in that**
the first layer (18) consists of a light-transmitting material which substantially does not adhere to the outer surface (16) of the third layer.

3. Cover foil (17,19) as claimed in claim 2,
**characterized in that**
the first layer (18) consists of light-transmitting, for instance transparent, PTFE, PE, PP or combinations thereof.

4. Cover foil (17,19) according to any of the preceding claims, wherein the layers are mutually connected by making use of co-extrusion.

## Patentansprüche

1. Lichtdurchlässiger Beschichtungsfilm (17, 19), der vorgesehen ist, um haftend an einer Oberfläche aufgebracht zu werden, die wahlweise Information trägt, wie beispielsweise Buchstaben, Zahlen, Bilder oder ähnliches, beispielsweise der Oberfläche einer Trägerplatte, wobei der Film aus einem Laminat besteht, umfassend:
eine erste Schicht (13), die nur bei einer relativ hohen, ersten Temperatur plastisch deformierbar ist, wobei die erste Schicht vor, während oder nach dem Verbinden mit den anderen Schichten mit einer Struktur versehen wird, die aus ihrer Hauptoberfläche ausgepreßt wird durch Ausüben eines Drucks und Erhöhen der Temperatur auf wenigstens die erste Temperatur;
eine zweite Schicht (15), die daran anhaftet und aus einer dimensionsmäßig stabilen Trägerschicht besteht; und
daran anhaftend,
entweder eine dritte Schicht (16), die schmelzbar und daher bei einer relativ niedrigen zweiten Temperatur thermisch aktiviert wird und aus einer Schmelzklebe- oder Klebemittelschicht besteht, wobei die Schicht wenigstens eines aus der Gruppe von Polycarbonat, PMMA, PVC, Polyester/PET und ABS umfaßt
oder eine druckempfindliche Klebemittelschicht,
wobei die Schichten durch Klebemittel miteinander verbunden sind,
**dadurch gekennzeichnet, daß**
eine lichtdurchlässige, nicht haftende Schicht (18), bestehend aus einem Film oder einer Schicht aus Siliconmaterial, PTFE, PE, PP oder deren Kombinationen, auf der Außenoberfläche (14) der ersten Schicht (13) angeordnet ist, wobei die erste hohe Temperatur im Bereich von 120°C-200°C liegt und wobei die erste Schicht wenigstens eines aus der Gruppe von Polycarbonat, PMMA, PVC, ABS, PP und PE umfaßt, wobei die niedrige zweite Temperatur im Bereich von 50°C - 90°C liegt und wobei die dritte Schicht wenigstens eines der Gruppe von EVA, EEA, EBA, EMA, GBA, Polyolefine, Copolymerestern, Polyacetatestern, erweichten PVC's, Acrylaten und auf Acryl basierenden Stoffen, umfaßt.

2. Beschichtungsfilm nach Anspruch 1,
**dadurch gekennzeichnet, daß**
die erste Schicht (18) aus einem lichtdurchlässigen Material besteht, das im wesentlichen nicht an der Außenoberfläche (16) der dritten Schicht anhaftet.

3. Beschichtungsfilm (17, 19) nach Anspruch 2,
**dadurch gekennzeichnet, daß**
die erste Schicht (18) aus lichtdurchlässigem, beispielsweise transparentem PTFE, PE, PP oder deren Kombinationen besteht.

4. Beschichtungsfilm (17, 19) nach einem der vorstehenden Ansprüche, bei welchem die Schichten unter Ausnutzung der Ko-Extrusion miteinander verbunden sind.

## Revendications

1. Feuille de revêtement transmettant de la lumière (17,19) destinée à être appliquée de manière adhérente à une surface portant éventuellement des informations telles que des lettres, des nombres, des images ou analogues, par exemple la surface d'une plaque de support, laquelle feuille consiste en un stratifié, comprenant :
une première couche (13) qui est uniquement déformable de manière plastique à une première température relativement élevée, laquelle première couche est proposée avant, pendant ou après avoir relié ensemble les autres couches avec une structure, percée dans sa surface principale en exerçant une pression et en augmentant la température à au moins ladite première température ;
une deuxième couche (15) adhérant à celle-ci consistant en une couche de support de dimension stable ; et
adhérant à celle-ci,
soit une troisième couche (16) pouvant fondre et donc thermiquement activée à une deuxième température relativement basse, et consistant en une couche de colle ou thermocollante, ladite couche comprenant au moins un du groupe des polycarbonate, PMMA, PVC, polyester/ PET, et ABS,
soit une couche de colle autocollante,
lesdites couches étant mutuellement reliées par des agents adhésifs,
**caractérisée en ce que**
une couche non adhésive transmettant de la lumière (18) consistant en un film ou une couche d'un matériau silicone, PTFE, PE, PP ou des combinaisons de ceux-ci est placée sur la surface externe (14) de la première couche (13),
dans laquelle la première température élevée est dans la plage de 120 °C à 200 °C, et dans laquelle la première couche comprend au moins un du groupe des polycarbonate, PMMA, PVC, ABS, PP et PE,
dans laquelle la deuxième température basse est dans la plage de 50 °C à 90 °C et dans laquelle la troisième couche comprend au moins un du groupe des EVA, EEA, EBA, EMA, GBA, polyoléfines, esters copolymères, esters de polyacétate, PVC ramollis, acrylates et substances acryliques.

2. Feuille de revêtement selon la revendication 1,
**caractérisée en ce que**
la première couche (18) consiste en un matériau transmettant de la lumière qui n'adhère sensiblement pas à la surface externe (16) de la troisième couche.

3. Feuille de revêtement (17, 19) selon la revendication 2,
**caractérisée en ce que**
la première couche (18) consiste en un matériau transmettant de la lumière, par exemple transparent, PTFE, PE, PP ou des combinaisons de ceux-ci.

4. Feuille de revêtement (17, 19) selon l'une quelconque des revendications précédentes, dans laquelle les couches sont mutuellement reliées en utilisant une co-extrusion.
